# EUROPEAN PATENT APPLICATION

(11) **EP 4 578 582 A1**
(43) Date of publication of application: **02.07.2025**
(21) Application number: 24223374.0
(22) Date of filing: 27.12.2024
(51) Int. Cl.: B23K 9/04, B23K 9/095, B23K 26/03, B23K 26/348, B33Y 10/00, B33Y 50/02

(54) **METHOD OF ADDITIVE MANUFACTURING METAL ARTICLES BY MEANS OF SUPERIMPOSED LAYERS AND RESPECTIVE EQUIPMENT**

(30) Priority: 28.12.2023 IT 202300028137
(71) Applicant: L.M.N. S.r.l., 10080 Salassa (TO) (IT)
(72) Inventor: LEONE, Paolo, 10080 Salassa (TO) (IT); POLETTO, Davide, 10080 Salassa (TO) (IT); SAVANT AIRA, Giuseppe, 10080 Salassa (TO) (IT)
(74) Representative: Nola, Eduardo

(57) **Abstract**

Method for the additive metal production of manufactured articles (22) by forming superimposed layers (24), using an equipment (21) comprising an operating head (30) equipped with an arc deposition torch (31) with a metal filler wire (34) of filler, laser beam generation means (33), movement means (32-1; 32-2; and 32-3) for moving the operating head, an electronic control and command unit (39) and a modeling program (27) of the manufactured article. The operating head (30) comprises optical means (47) connected to the means for generating laser beams for a hybrid formation of the layers (LAMWD), a temperature sensor (38) and a height sensor (51) for the layers being formed. The modeling program (27) provides for an elementary stratification with a fine pitch which represents the set of the possible paths to be used for the growth of the manufactured article, the feeding device for the filler wire is controlled so as to grow the manufactured article with a deposition layer according to the model parameters. The growth steps are determined by depositing a new layer in accordance with a correct elementary layer, updated deposition pitch and updated deposition offset for a controlled growth and a precise progression of the manufactured article.

## Description

The present invention relates to a method for producing metal additives for manufactured articles by means of superimposed layers and a respective equipment.

More specifically, the invention refers to a method of additive metal production of manufactured articles by forming superimposed layers, with the use of an apparatus for its execution, comprising an operating head equipped with an arc deposition torch of the filler metal wire type and a related advancement device, laser beam generation means, an electronic control and command unit for the operating head and for the movement system and a modeling program for modelling the manufactured articles, in accordance with the introductory part of claim 1.

The additive metal production with filler wire is an advanced 3D manufacturing process. According to typical WAAM (Wire-Arc Additive Manufacturing) technology, it uses an arc deposition torch with filler wire to create three-dimensional metal objects from mathematical models through the overlapping of layers. This technology combines the principles of welding and additive manufacturing, allowing precise adjustment of material transfer without generating large melting pools, thereby minimizing residual deformations and stresses in the machined workpieces.

The WAAM process is widely used in the manufacturing industry, especially for producing complex parts, prototypes, and high-precision components in industries such as aerospace, automotive, and mechanical engineering. It offers numerous advantages, including the ability to operate with a wide range of metals, good reproducibility of complex shapes, and minimization of material waste.

Alternatively, the additive metal production method can use laser beams to melt the wire and transfer it onto the manufactured article being formed. Examples of such technologies are reported in publications US2015041025 and US2021060861. The use of laser beams for generating fusion energy is advantageous for the quality of the manufactured article but requires complex and expensive structures.

The WAAM process is fast and relatively inexpensive. However, the manufactured articles, formed with high melting and solidification speeds, can generate internal defects such as pores, incomplete fusions, cracks, and shrinkage porosity. Patent US 10,682,716 discloses the additional use of a laser generator that irradiates the arc deposition region in a controlled manner to perform impact forging with refinement of the crystallization grains in the deposition layer.

In the patent publication US 2020/246899, a method of additive metal production for manufactured articles, as previously mentioned, is described. In this method, the article being formed is periodically scanned and the scan is compared with a three-dimensional model. Based on this comparison, the processing circuit can adjust one or more operating characteristics of the system to facilitate the formation of the article.

Patent publications US 2010/326962, US 2022/331904, WO 2022/149426, and US 2023/311227 describe various systems for correcting the deposition of layers, generally by varying related operating parameters.

An object of the invention is to provide an additive metal production method for manufactured articles by forming superimposed layers with arc deposition with filler wire and the use of laser beams, ensuring high reliability, high operating speed, relatively low costs, and using readily available materials.

In accordance with this object, the modeling program provides for an elementary stratification with a fine pitch which represents the set of the possible paths to be used for the growth of the manufactured article, the feeding device for the filler wire is controlled so as to grow the manufactured article with a deposition layer according to the model parameters and wherein said method is performed according to phases of updating the deposition pitch keeping it unchanged if the average height corresponds to the theoretical one, or correcting the deposition pitch based on the difference detected in case of deviation between the average height of the last deposited layer and its theoretical height and selecting the new layer to be deposited among the elementary stratification set based on the measured total height increased by the updated deposition pitch according to the characteristic part of claim 1.

Further characteristics and advantages of the invention will become clear from the following description with reference to the attached drawings, provided purely by way of non-limiting example, in which:
Fig. 1 is a schematic view of an equipment for the metal production of manufactured articles with an operating head according to the method of the invention;

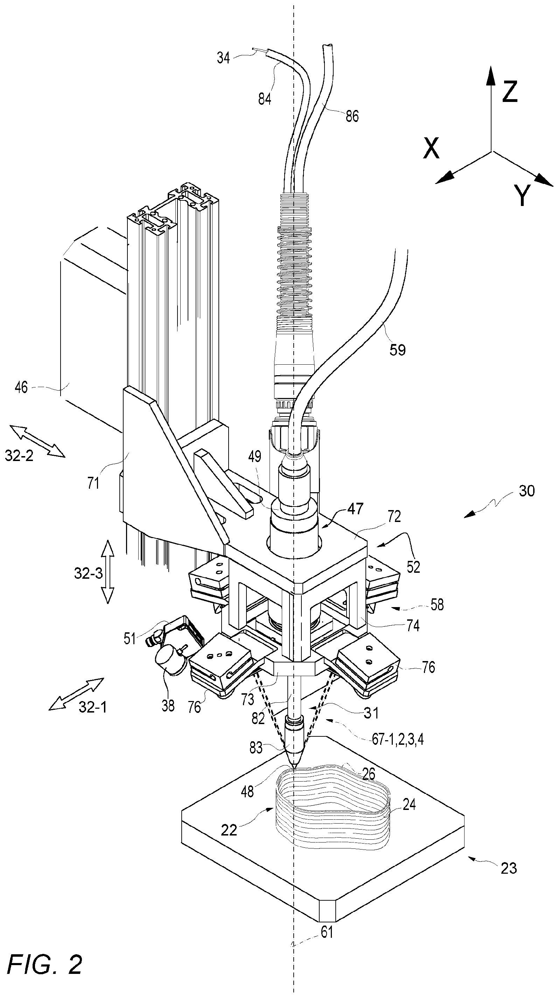

Fig. 2 shows, on an enlarged scale, the schematic view of the operating head of Fig. 1;

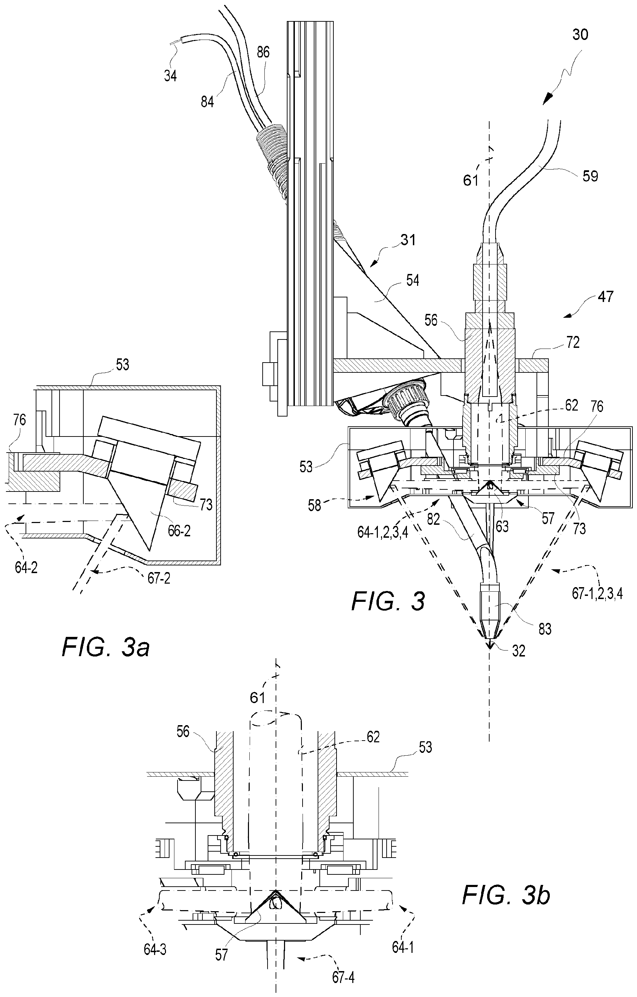

Fig. 3 is a schematic side section of the operating head of Fig. 1;
Figs. 3a and 3b show enlarged details of the section of Fig. 3;
Fig. 4 shows a front view of the operating head of Fig. 1;
Fig 4a representsa front scheme of parts of the operating head and of a particular manufactured article in formation;

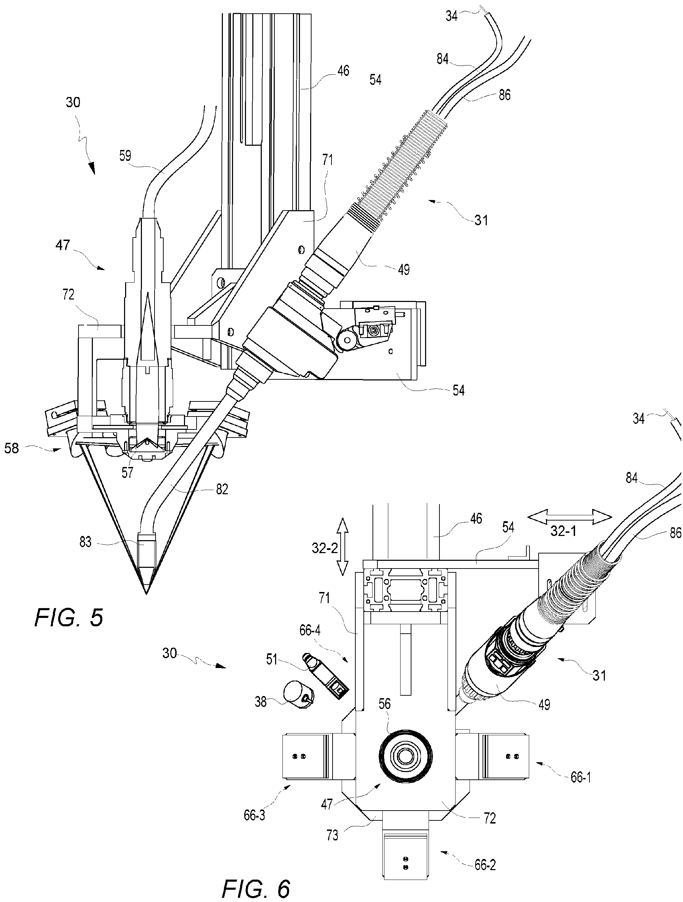

Fig. 5 shows another schematic section of the operating head of Fig. 1;
Fig. 6 is a schematic top view of the operating head of Fig. 1; and
Fig. 7 shows a block diagram of the method for the additive metal production of manufactured articles according to the invention.

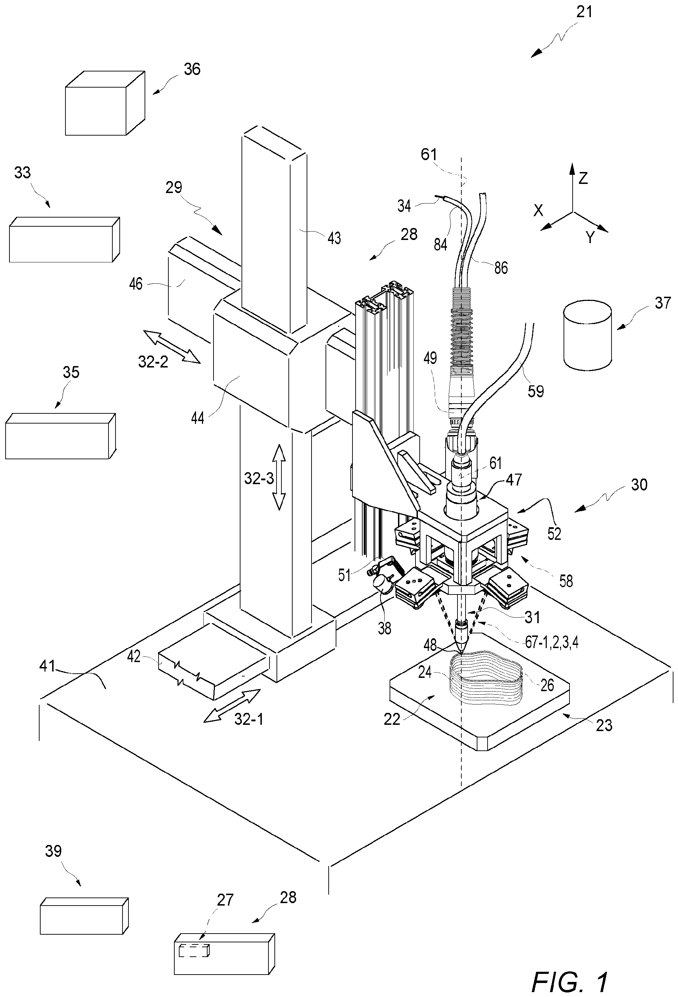

In the representation of Figure 1, reference number 21 designates, as a whole, an equipment for the additive metal production of manufactured articles 22 used in the method of the invention.

Some terms used herein have the following meanings:
- Elementary layers "EL": The fine elementary layers generated by the layering software;
- Deposition layer "DL": The single deposition bead;
- Deposition pitch "DP": The number of elementary layers that form the deposition layer;
- Deposition Offset "DO"; The distance in height between the operating head and the depositing layer.

The equipment 21 forms the manufactured article 22 on a support base 23 by superimposing layers 24 along a programmed path 26 as executed by a modeling slicing software 27 and by means of a numerical control system (CNC) 28.

In summary, the equipment 21 comprises a frame 29, an operating head 30 with an arc deposition torch 31, movement means 32-1, 32-2, and 32-3, and a laser generator 33. The frame 29 supports the operating head 30, and the movement means 32-1, 32-2, and 32-3 provide for the movement of the head. The torch 31 uses a filler wire 34, while the equipment 21 also comprises a supply unit 35 for the torch 31, a magazine 36 for the wire 34, a tank 37 for a covering gas for the torch 31, a temperature sensor 38 for the layers 24 mounted on the head 30, and an electronic control unit 39 for the operating head 30 and the movement means 32-1, 32-2, and 32-3.

The frame 29 also provides for the positioning of the operating head 30 with respect to coordinated axes X, Y, and Z. Schematically, the frame 29 comprises a worktable 41 with a longitudinal guide 42, a support column 43 sliding on the guide 42 along the X-axis, an intermediate block 44 sliding vertically on the column 43 along the Z-axis, and a head-holder block 46 sliding transversely on the intermediate block 44 along the Y-axis.

The support base 23 for the manufactured article is fixed on the worktable 41, and the operating head 30 is mounted on the head-holder block 46. The movement means 32-1, 32-2, and 32-3, in turn, are provided to move the column 43, the intermediate block 44, and the head-holder block 46, respectively, and comprise motors, not shown, controlled by the CNC system 28.

In accordance with the invention, the operating head 30 supports an optical assembly 47 connected to the laser generator 33. The equipment 21 further comprises a feeding device 49 for the filler wire 34 mounted on the torch 31 and a height sensor 51 mounted on the head 30, while the movement means 32-1, 32-2, and 32-3 operate on the operating head 30 for the joint advancement of the deposition torch 31 and the optical assembly 47 along the programmed path 26.

The electronic unit 39, in response to information from the temperature sensor 38, the height sensor 51, and the modeling program 27, controls the feeding device 49, the feeding unit 35, the laser generator 33, and the movement means 32-1, 32-2, and 32-3 for a hybrid arc/laser formation (LAMWD) of the layers 24 on a growth area 48 of the manufactured article 22.

In greater detail, the operating head 30 comprises a frame 52 for the temperature sensor 38, the optical assembly 47 and the height sensor 51, a casing 53 and a support 54 for the torch 31, with the frame 52 and the support 54 mounted on the head-holder block 46.

The optical assembly 47 includes a collimation unit 56 with lenses (not shown), a divider element 57 and refocusing mirrors 58. The collimation unit 56 is connected to the laser generator 33 by means of optical fibers 59 and is centered on a substantially vertical axis 61, passing through and defining the growth area 48. Upon activation of the generator 33, the collimation unit 56 forms a main laser beam 62 coaxial with the axis 61. The divider element 57 is designed to divide and deflect the main beam 62 into multiple side beams, while the refocusing mirrors 58 reflect the side beams and refocus them from different directions, converging on the growth area 48.

The dividing element 57 consists of a pyramidal mirror 63, which divides the main beam 62 into four lateral beams 64-1, 64-2, 64-3, and 64-4, arranged in a cross-like manner. The refocusing mirrors 58 comprise four mirrors 66-1, 66-2, 66-3, and 66-4, spaced at the sides of the pyramidal mirror 63, which deflect the side beams as converging beams 67-1, 67-2, 67-3, and 67-4, focused on the growth area 48.

The deposition torch 31 operates in a centered manner on the axis 61, passing through a free space between two contiguous beams of the converging beams 67-1, 67-2, 67-3, and 67-4.

The frame 52 of the operating head 30 is formed by a bracket 71 with an upper plate 72 fixed on the head-holder block 46, a lower plate 73, and a spacer block 74 between the two plates 73 and 74.

The plates 72 and 73 have holes centered with respect to the axis 61 for vertical mounting of the collimation unit 56, respectively in an intermediate part and an end part. The lower plate 73 supports, on the opposite side with respect to the plate 72, the pyramidal mirror 63 and the refocusing mirrors 58. The pyramidal mirror 63 is mounted by means of spacers below the collimation unit 56, centered on the axis 61, while the refocusing mirrors 58 are mounted by means of appendices 76 on the four sides of the pyramidal mirror 63.

The casing 53 protects the collimation unit 56, the pyramidal mirror 63, and the mirrors 66-1, 66-2, 66-3, and 66-4, and has lower windows in front of the refocusing mirrors for the passage of the converging beams 67-1, 67-2, 67-3, and 67-4 toward the growth area 48.

The refocusing mirrors 66-1, 66-2, 66-3, and 66-4, and the pyramidal mirror 63 are made of copper and are cooled by hydraulic ducts (not shown in the figures).

The deposition torch 31 is of a known type and comprises a body 81 and a pipe 82 with a nozzle 83. The torch 31 is connected by means of a sheath 84 to the magazine 36 for the filler wire 34 and, by means of a flexible duct 86, to the covering gas tank 37. The body 81 is fixed to the torch holder 54 and houses the wire feed device 49. The pipe 82 is bent at the nozzle 83 and, together with the nozzle forms the passage for the filler wire 34 and the covering gas.

The height sensor 51 is, for example, an infrared triangulator for accurate detection of elementary layers or layers from 0.15 to 2.5 mm.

As an indication, under operating conditions, the deposition offset "DO" of the operating head 30 (for example the lowest part of the casing 53) and the support base 23 or the highest part of the last deposited layer is approximately 100 mm.

The laser assists but does not replace the arc as the primary energy source. By way of example, the power of the laser generator may represent between 20% and 40% of the power of the arc torch 31.

This structure provides a high speed of the formation process, better stability of the deposited bead with well-defined boundaries, and a flattened profile.

The modeling program 27 for the manufactured article 22 provides a preliminary setting for a deposition pitch "DP" based on similar parameters and an elementary fine-pitch stratification "DL" which represents the set of possible paths to be used for the growth of the manufactured article 22. The feed device 49 for the filler wire 34 is controlled so as to grow the manufactured article with a deposition layer "DL" according to the model parameters and the method for the production of the manufactured article is performed according to the following phases:
a) Depositing the layer with a deposition pitch based on the model parameters;
b) Monitoring the temperature and performing a cooling pause until reaching a reference temperature, functional for the deposition of a new layer;
c) During the cooling pause, retracing the perimeter of the layer just deposited, detecting the total height reached by the manufactured article;
d) Determining the average height of the last deposited layer as the difference between the current total height and the height detected previously;
e) Updating the deposition pitch keeping it unchanged if the average height corresponds to the theoretical one, or
   e.1) Correcting the deposition pitch based on the difference detected in case of deviation between the average height of the last deposited layer and its theoretical height;
f) Selecting the new layer to be deposited among the elementary stratification set based on the measured total height increased by the updated deposition pitch;
g) Updating the deposition offset to keep the torch/workpiece distance provided by the modeling program constant; and
h) Depositing the new layer in accordance with the correct elementary layer, the deposition pitch and the deposition offset for a controlled growth and a precise progression of the manufactured article.:

The path 26 of the operating head 30 follows a closed perimeter, with a height, partial overlap, and alternating directions between one layer and the subsequent layer.

The deposition method above reported is functional to the fact that the numerical control system (CNC) does not modify the deposition parameters defined by the slicing software 27. However, during the deposition of the metal, the deposited thickness is not always constant but can vary, depending on a set of uncontrolled variables, such as the shape of the piece or the residual thermal gradients (to mention the most relevant ones). With this constraint, according to the invention, an algorithm is used which measures the deposited quantity and does not update the parameters but varies both the tdeposition offset "DO", i.e., the distance of the torch 31 from the growth area 48 , and the elementary layer "EL" of reference for the deposition.

If, for example, the deposition tends to deposit more material, in order to reach the desired final height of the piece, fewer layers are deposited, increasing the growth pitch, thus adapting to what is happening on the workpiece. Conversely, if the deposition grows less than theoretical, more layers are deposited, decreasing the growth pitch. In this way, in addition to obtaining the desired final height, the piece is generated with the desired shape, as an effect of the layer used for the deposition closest to the current dimension.

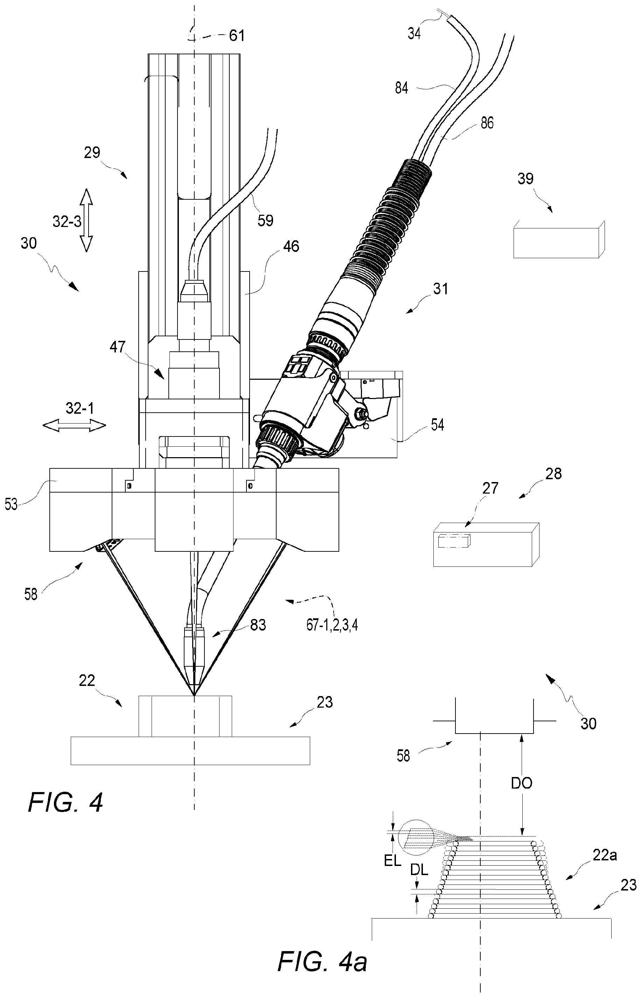

The correction system is based on the joint feedback of the parameters: deposition offset, deposition pitch and elementary layer chosen, necessary to obtain adequate precision and repeatability in an industrial context. In fact, the high temperatures involved in the melting process and the overall thermal evolution of the cooling transient without adequate feedback could generate defective manufactured articles or articles which do not correspond to the CAD model. In particular, this correction system ensures that the paths set for the depositions of the current layers are those relating to the heights actually reached and not the paths of the theoretical heights of the modeling that would lead to even significant discrepancies if such paths strongly depend on the height, as for manufactured article 22a represented in fig. 4a.

The correction system still provides a "closed-loop control" necessary to obtain suitable precision and repeatability in an industrial environment. This, despite the high temperatures involved in the melting process and the overall thermal evolution of the cooling transient, which could generate defective articles or not corresponding to the CAD model.

Optionally, the stratification is divided into several sections with increasing dimensions having homogeneous characteristics, and this correction criterion is applied to the various sections of the article in the most appropriate manner.

The variation of the layer keeps the piece consistent with the CAD drawing and prevents the repetition of defects after some layers, making it impossible to print further.

With the corrections made, the article is "good" from the first piece. The remaining dimensional errors are eliminated without particular machining in the subsequent finishing steps, which are necessary in the additive metal production technique.

The operation of the equipment 21 is as follows:

In a preliminary step, the geometrical and technological data of the article to be manufactured are set on the modeling program 27. Specifically, among others, and based on experiences with similar models:
- Optional division of the model of the manufactured article into several sections of increasing dimensions characteristic of the manufactured article itself;
- Layer division (elementary layers) of the CAM software with fine pitch (for example 0.2-mm);
- Height of the deposition layer (the bead to be deposited, example 1.6 mm) as the number of elementary layers (example 8);
- Deposition offset (exemplary 100mm between casing 53 and last deposited layer);
- Voltage and current for the deposition torch 31;
- Feeding speed of the filler wire 34.
- Speed of movement of the operating head 29:
- Power of the laser; and
- Waiting cooling temperature for subsequent deposition.

By way of example, the filler wire 34 is of a commercial type, such as austenitic Fe or Ni, Al, or Ti alloys. The power of the laser generator is 0.8-1 kW, the power of the r supply unit for the torch is 3-4 kW, the speed of advance of the operating head is 10-30 mm/sec, the feed wire speed is 100 mm/sec, and the cooling temperature is about 400° Celsius.

The step of forming the layers 24 starts by activating the movement means 32-1, 32-2, and 32-3, positioning the operating head 30 at the starting point of the path 26, and turning on the arc and the laser generator 33, according to a known ignition technique. The movement means 32-1, 32-2, and 32-3 are used to move the operating head 30 at the set speed, in a given direction of advance, with the layer being deposited in a hybrid manner along the path 26 and limited overlap with respect to the starting point.

At the end of the deposition of the layer, the arc and the laser generator are switched off for a cooling pause according to a known switch-off technique, and the perimeter of the layer just deposited is retraced by detecting the point height of the deposited layer using the height sensor 51.

Based on the detected heights, the program calculates the average height of the deposited layer 24 and compares it with the set height. In the event of a difference, the program determines an updated height of the new layer to be deposited to compensate for the deviations between the set height and the deposited average height.

In particular, if the calculated difference is zero, the same growth pitch is continued. If the difference is less than zero, the growth pitch is reduced by a value equal to the datum obtained, and the setting layer closest to the value obtained is selected. If the difference is greater than zero, the growth pitch is increased by a value equal to the datum obtained and the setting layer closest to the value obtained is chosen and the torch/piece distance is compensated to keep the deposition offset constant.

When the temperature sensor 38 detects the reaching of the expected cooling temperature, the program starts a new deposition step, as previously described, with the positioning of the operating head 30 at the starting point of the new path 26, reversal of the direction of advance of the head, switching on of the arc and the laser generator 33, moving of the operating head 30 at the set speed, hybrid deposition of the layer for a height equal to the compensated value, detection of the height of the newly deposited layer, and calculation of the compensated height for the next layer.

This occurs in sequence for all the sections into which the model of the article has been divided, if provided.

In practice, the correction algorithm is limited to deciding which deposition layer "DL" to deposit among those previously created by the slicer software. The height error (difference between the measured medium height and the nominal height), divided by the elementary layer "EL" (0.2 mm), is added to or subtracted from the current pitch to find the correct layer to be deposited.

With reference to the above-mentioned parameters, if, for example, after the fifth deposition layer "DL" (elementary layer 40), the detection of the height shows that the manufactured article is 0.4 millimeters higher than the theoretical height (height of 8 mm, which corresponds to the 0 reading level of the detector), due to the correction (after cooling), the deposition is not effected along the path of the elementary layer 48=40+8 but the deposition related to the elementary layer 50=40+10, thus compensating for the detected defect with a pitch increase of 2 units (0.4/0.2). Vice versa, if the workpiece grows less than expected, layers of material are deposited along the paths relating to one or more elementary layers less than the theoretical quantity. For example, for an article lower by 0.6 mm, the material is deposited along the path of the elementary layer 45 instead of layer 48.

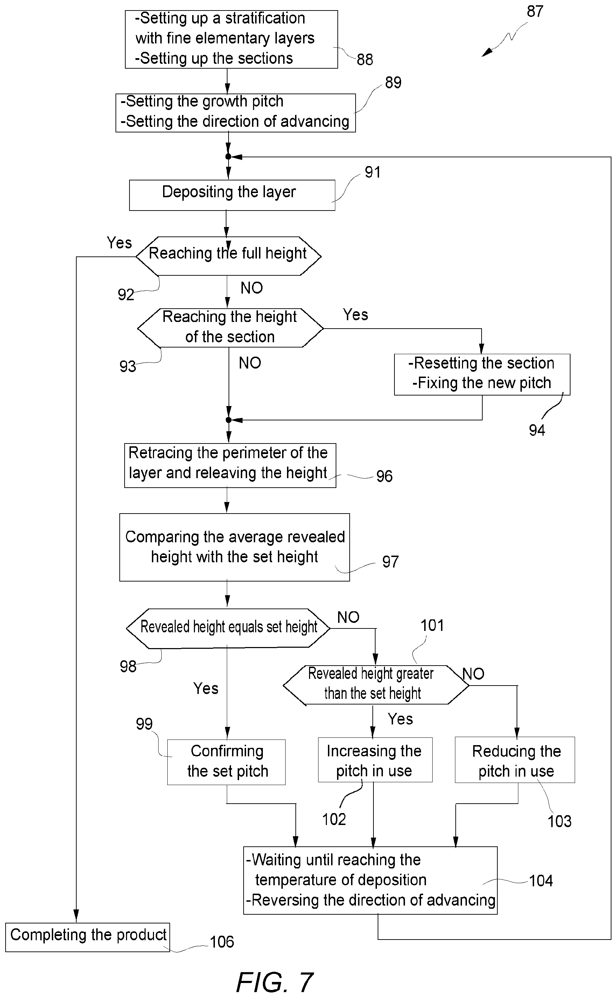

From the above, with reference to Figure 7, the method for the additive metal production of manufactured articles, indicated with 87, therefore comprises a preliminary step in which, in block 88, the stratification is set to fine pitch and the number and characteristics of the various sections, if provided. In block 89, a step of growth of the layer 24 to be deposited and the direction of advance of the operating head 30 are set.

The forming step comprises block 91, deposition of the layer 24, stopping, and detecting the height of the deposited layer. At junction 92, it is determined whether the deposited layer is the last one of the manufactured article, and if not, at junction 93, it is determined whether the height of the current section has been reached. If not, in block 96, the perimeter of the deposited layer is traced, the height is detected and the average value is calculated, while block 97 compares the average detected height with the set height.

At junction 98, it is determined if the detected height is equal to the set height. If so, in block 99, the number of elementary pitches set by the program is confirmed. If, on the other hand, at junction 98, the detected height is different from the set height, it is determined at junction 101 if the detected height is greater than the set height. If so, in block 102, the number of elementary pitches is increased with respect to that set by the program to a higher, closer compensated value for correction.

In the case where at junction 101 the detected height is not greater than the set height, in block 103, the number of elementary pitches is reduced with respect to that set by the program to a lower compensated value, closer for correction.

After setting the number of pitches confirmed or corrected, the cooling of the layer is expected in block 104 until the expected restart temperature is reached. The head 30 for the new layer is positioned, the direction of advance of the head 30 is reversed, and the new layer 24 is deposited back to block 91, with the direction of advance reversed with respect to that of the previous step.

When, at junction 92, it is verified that the deposited layer is the last of the article, the product completion step is carried out in block 106. If at junction 92 it is verified that the height of the current section has been reached, in block 94, the new section is reset, possibly the new growth pitch is fixed, and block 96 and the subsequent steps of height detection and correction relating to the set pitch are passed, as described above.

Naturally, the principle of the invention remaining the same, the embodiments and details of construction may be varied widely with respect to what has been described and illustrated purely by way of non-limiting example, without thereby departing from the scope of the present invention.

The divider element and refocusing mirrors may have different structures and divide the main laser beam into a number of converging beams greater than or less than four.

In a variant, the contribution of the laser irradiation can be made by several laser sources with rays converging on the accumulation area.

## Claims

1. A method for the additive metal production of manufactured articles by forming superimposed layers, using an equipment for its execution, comprising an operating head equipped with an arc deposition torch with metal filler wire and a respective advancing device, laser beam generation means, movement means for moving said head along a perimeter of the layers of a manufactured article being formed, an electronic control and command unit for the operating head and for the movement system and a modeling program for the manufactured article with a preliminary setting for a growing step based on similar parameters, wherein the operating head presents a certain deposition offset in height from the manufactured article being formed and comprises optical means connected to the laser beam generation means for a hybrid formation of the layers on a growth area of the manufactured article, a temperature sensor for said layers and a height sensor for the deposited layers and wherein said method is **characterized in that** the modeling program provides for an elementary stratification with a fine pitch which represents the set of the possible paths to be used for the growth of the manufactured article, the feeding device for the filler wire is controlled so as to grow the manufactured article with a deposition layer according to the model parameters and wherein said method is performed according to the following phases:
a) Depositing the layer with a deposition pitch based on the model parameters;
b) Monitoring the temperature and performing a cooling pause until reaching a reference temperature, functional for the deposition of a new layer;
c) During the cooling pause, retracing the perimeter of the layer just deposited, detecting the total height reached by the manufactured article;
d) Determining the average height of the last deposited layer as the difference between the current total height and the height detected previously;
e) Updating the deposition pitch keeping it unchanged if the average height corresponds to the theoretical one, or
e.1) Correcting the deposition step based on the difference detected in case of deviation between the average height of the last deposited layer and its theoretical height;
f) Selecting the new layer to be deposited among the elementary stratification set based on the measured total height increased by the updated deposition pitch;
g) Updating the deposition offset to keep the torch/workpiece distance provided by the modeling program constant; and
h) Depositing the new layer in accordance with the correct elementary layer, the deposition pitch and the deposition offset for a controlled growth and a precise progression of the manufactured article.

2. Method for the additive metallic production of manufactured articles according to claim 1, **characterized in that**, for a calculated height greater than the theoretical height, increase the set deposition step by a value close to the deviation and, for a calculated height less than the theoretical height, reduce the set deposition step by a value close to the deviation.

3. Method for the additive metal production of manufactured articles according to claim 1 or 2, **characterized in that** the modeling program provides for an increase in height and a division into multiple sections with increasing heights, in which the elementary stratifications of said sections provide for respective specific deposition steps and in which, after step d), check whether the height of a current section has been reached and, if so, set for a subsequent section a respective specific deposition step for said subsequent section.

4. Method for the additive metal production of manufactured articles according to one of the preceding claims, **characterized in that**, at the end of step h), switch off the arc and the laser generator, according to a known switch-off technique, for the cooling pause of the deposited layer.

5. Method for the additive metal production of manufactured articles according to one of the preceding claims, **characterized in that** steps a)-h) are repeated until a completion step of the manufactured article is reached.

6. Method for the additive metal production of manufactured articles according to one of the preceding claims, **characterized in that**, indicatively, the filler wire is of a commercial type, such as austenitic Fe or in alloys of Ni, Al, or Ti, the power of the laser generator is 08÷1 Kw, the power of the power supply unit for the torch is 3÷4 Kw, the feeding speed of the operating head is 10÷30 mm/sec, the deposition offset, as a distance between a lower surface of the optical means is approximately 100 mm, the feeding speed of the filler wire is 100 mm/sec and the height sensor comprises an infrared triangulator for the detection of elementary layers from 0.15 to 2.5 mm.

7. Method for the additive metal production of manufactured articles according to one of the preceding claims, **characterized in that** the movement means are controlled by the electronic control and command unit as execution of the modeling program and by means of a numerical control system (CNC).

8. Method for the additive metal production of manufactured articles according to one of the preceding claims, in which. the operating head comprises a temperature sensor for the last deposited layer and the modeling program fixes, on the basis of similar manufactured articles, power parameters for the deposition torch, feeding speed of the filler wire, movement speed of the operating head, power of the laser beam generation means; and expected cooling temperature of the last deposited layer for a subsequent deposition, said method being **characterized in that** it keeps constant for the layers to be deposited the parameters set by the modeling program.

9. Method for the additive metal production of manufactured articles according to one of the preceding claims, **characterized in that** the elementary layers have a thickness of 0.15 mm to 2.5 mm.

10. Method for the additive metal production of manufactured articles according to one of the preceding claims, **characterized in that** the laser beam generation means deliver a power of between 10% and 40% of the torch power.

11. Method for the additive metal production of manufactured articles according to one of the preceding claims, **characterized in that** the cooling temperature is approximately 400° Celsius.

12. Method for the additive metal production of manufactured articles according to one of the preceding claims, **characterized in that** the modeling program provides for the movement of the operating head along a closed perimeter and **in that** the operating head is moved with partial overlap and in alternating directions between a deposition layer and a subsequent deposition layer.

13. Method for the additive metal production of manufactured articles according to one of the preceding claims, **characterized in that** in said equipment the laser beam generation means comprise a laser generator and the optical means include a collimation unit connected to the laser generator to form a main beam in axis with the head, a division unit to divide and deviate the main beam into several lateral beams and a plurality of refocusing mirrors to reflect and refocus from a plurality of directions the lateral beams onto the growth area of the manufactured article.

14. An equipment usable in the method for the additive metal production of manufactured articles according to one of claims 1 to 12, **characterized in that** the optical means include a collimation unit connected to the laser generator to form a main beam in axis with the head, a pyramidal mirror in axis with the head to receive said beam and divide it with deviations into four cross-shaped lateral beams and four refocusing mirrors to reflect and refocus from four directions the lateral beams on the growth area of the manufactured article, the deposition torch comprises a nozzle and a bent pipe corresponding to the nozzle and passing together with the nozzle for the filler wire and for a covering gas and in which the deposition torch operates in axis with the main beam, passing in a free space between the concurrent beams and in which the nozzle of the deposition torch operates in axis with the main beam, while the pipe passes in a free space between two concurrent beams.

15. Equipment according to claim 14, **characterized in that** the operating head comprises a frame for the collimation unit, a casing and a support for the deposition torch and in which said casing is protective for the collimation unit, for the pyramidal mirror and for the refocusing mirrors and has lower windows, in front of the refocusing mirrors, for the passage of the concurrent beams towards the growth area of the manufactured article.
